# EUROPÄISCHE PATENTANMELDUNG

(11) **EP 4 682 577 A1**
(43) Veröffentlichungstag der Anmeldung: **21.01.2026**
(21) Anmeldenummer: 25188572.9
(22) Anmeldetag: 09.07.2025
(51) Int. Cl.: G01S 7/41, G01S 13/00, G01S 13/02, G01S 13/04, G01S 13/28, G01S 13/52, G01S 13/56, G01S 13/88, G01S 7/292, G01S 13/10

(54) **UWB-TAG UND VERFAHREN ZUM FESTSTELLEN EINER ANWESENHEIT EINES LEBENDEN OBJEKTES UND EIN MULTI-STATISTISCHES RADARSYSTEM**

(30) Priorität: 15.07.2024 DE 102024206648
(71) Anmelder: Lateration GmbH, 85435 Erding (DE)
(72) Erfinder: SIDORENKO, Juri, 85435 Erding (DE); SCHOBER, Michael, 8020 Graz (AT)
(74) Vertreter: Zimmermann, Tankred Klaus

(57) **Zusammenfassung**

Beschrieben ist ein UWB-Tag (10) zum Feststellen einer Anwesenheit eines lebenden Objektes (20), wobei der UWB-Tag (10) mindestens einen UWB-Frontend-Transceiver (11) umfasst und der UWB-Tag (10) dazu ausgebildet ist, mehrere Pulse (30) zu senden und mehrere dazugehörige reflektierte Kanal-Impuls-Antworten (32) zu empfangen und anschließend hinsichtlich einer Änderung in den empfangenen dazugehörigen reflektierten Kanal-Impuls-Antworten (32) auszuwerten, wobei das Feststellen der Änderung in den dazugehörigen reflektierten Kanal-Impuls-Antworten (32) die Anwesenheit des lebenden Objektes (20) anzeigt. Ferner sind ein Verfahren (100) zum Feststellen einer Anwesenheit eines lebenden Objektes (20) unter Verwendung mindestens eines UWB-Tags und ein Multi-statistisches Radarsystem beschrieben.

## Beschreibung

Die vorliegende Erfindung betrifft ein UWB-Tag zum Feststellen einer Anwesenheit eines lebenden Objektes, ein Verfahren zum Feststellen einer Anwesenheit eines lebenden Objektes unter Verwendung mindestens eines UWB-Tags und ein Multi-statistisches Radarsystem.

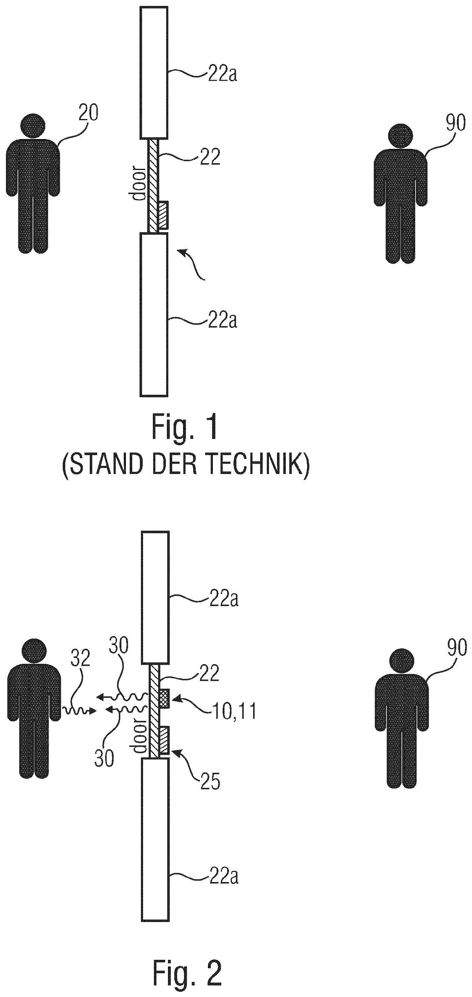

Wenn Spezialeinheiten heutzutage ein Haus stürmen müssen, ist es üblich, die Haustür zu sprengen. Fig. 1 zeigt ein klassisches Scenario, bei dem Terroristen eine Tür blockieren. Die Spezialeinheit befindet sich auf der rechten Seite in sicherer Distanz zur Tür und ist bereit die Sprengladung, welche sie zuvor platziert hat zu sprengen, um danach das Haus zu stürmen. Auf der linken Seite befinden sich aber Geiseln, welche direkt hinter der Tür platziert wurden, welche bei einer Sprengung sehr schwer verletzt würden. Die Spezialeinheit könnte aber nichts von den Geiseln wissen, was wiederum bedeutet, dass sie diese wahrscheinlich sprengen und das Risiko auf Verletzungen Seitens der Geiseln eingehen. Idealer weiße bekommt die Spezialeinheit aber irgendwoher aber die Information darüber, dass Geiseln auf der anderen Seite der Tür platziert wurden und brechen die Sprengung ab und öffnen die Tür auf eine andere Art und Weise bzw. wählen einen anderen Eingang, um in das Haus zu kommen.

Das Sprengen der Tür kann zu Verletzungen von Menschen oder anderen Lebewesen auf der anderen Seite der Tür führen. Speziell wenn die Tür von Terroristen barrikadiert wurde, ist die Wahrscheinlichkeit groß, dass Geiseln direkt hinter der Tür platziert werden. In solch einem Scenario, würde ein Sprengen der Tür zu schweren Verletzungen oder der Tötung der Geiseln führen.

Es bedarf daher eine Lösung, um sicher entscheiden zu können, ob eine Tür oder einer Wand etc. gesprengt werden kann, um zu leben Objekten hinter der Tür oder Wand etc. vordringen zu können, ohne die lebenden Objekte zu verletzen.

Die Referenz [1] offenbart einen Artikel über die Anwendung der Fouriertransformation auf UWB-Signale, um durch Wände zu sehen, und dadurch Bewegungen und Atmung zu detektieren.

Die Referenzen unter [2], [3] und [4] sind jeweils Links zu einem UWB GPR-Detektor, welcher dazu verwendet werden kann, um Menschen hinter einer Wand zu detektieren, wobei der UWB GPR-Detektor sehr teuer ist und wiederverwendet werden soll.

US7999722B2 ist ein zu Referenz [2] korrespondierendes Patent. US7999722B2 offenbart ein Durch-die-Wand-Bildgebungsgerät mit Antennenelementen zum Senden und Empfangen von Signalen, die so angepasst sind, dass sie durch eine Wand hindurchgehen, um dahinter liegende Objekte abzubilden, und dass eine Basis mit einem Trägerabschnitt und einer Vielzahl von damit verbundenen, voneinander beabstandeten Verlängerungen aufweist. Zumindest ein Teil der Antennenelemente ist auf den Verlängerungen montiert. Der Bereich zwischen benachbarten Verlängerungen ist zumindest dann frei von jeglichem Material der Basis, wenn sich die Verlängerungen im Betriebszustand befinden.

Eine Aufgabe der vorliegenden Erfindung ist es, einen UWB-Tag und ein Verfahren zum Feststellen einer Anwesenheit eines lebenden Objektes hinter einem Sichtschutz, wie einer Tür oder einer Wand etc. bereitzustellen.

Diese Aufgabe wird durch den Gegenstand der beigefügten unabhängigen Ansprüche gelöst.

Um ein Scenario wie soeben beschrieben zu vermeiden, ist vorgeschlagen, ein UWB-Tag an einem Sichtschutz, wie einer Tür oder einer Wand etc. anzubringen. Dieser Tag wird auf der Seite der Spezialeinheit angebracht und signalisiert der Spezialeinheit, ob sich jemand in unmittelbarer Nähe hinter der Tür befindet. Je nachdem ob der UWB-Tag signalisiert, dass sich jemand hinter der Tür oder der Wand etc. der befindet, kann die Tür gegebenenfalls gesprengt werden oder ansonsten auf eine andere Art und Weise in das Haus eingedrungen werden, um ein Verletzen lebender Objekte, wie Geiseln, zu vermeiden.

Der vorgeschlagene UWB-Tag zum Feststellen einer Anwesenheit eines lebenden Objektes umfasst mindestens einen UWB-Frontend-Transceiver. Der UWB-Tag ist dazu ausgebildet, mehrere Pulse zu senden und mehrere dazugehörige reflektierte Kanal-Impuls-Antworten zu empfangen und anschließend hinsichtlich einer Änderung in den empfangenen dazugehörigen reflektierten Kanal-Impuls-Antworten die empfangenen reflektierten Kanal-Impuls-Antworten auszuwerten, wobei das Feststellen der Änderung in den dazugehörigen reflektierten Kanal-Impuls-Antworten die Anwesenheit des lebenden Objektes anzeigt.

Der beschriebene UWB-Tag kann dazu genutzt werden, den UWB-Tag an einer Tür anzubringen, um zu detektieren, ob sich jemand auf der anderen Seite der Tür befindet und falls ja in welcher Distanz. Mit Hilfe dieser Information kann entschieden werden, ob die Tür gesprengt wird, oder ob eine andere Art und Weise gewählt wird, um die Tür zu öffnen.

Ein weiterer Aspekt der vorliegenden Erfindung betrifft ein Verfahren zum Feststellen einer Anwesenheit eines lebenden Objektes unter Verwendung mindestens eines hierin beschriebenen UWB-Tags. Das Verfahren umfasst ein Anordnen des mindestens einen UWB-Tags an einem nichtlebenden Objekt, ein Aussenden mehrerer Pulse durch den mindestens einen UWB-Tag, wobei der UWB-Tag mindestens einen UWB-Frontend-Transceiver umfasst. Das Verfahren umfasst ein Empfangen mehrerer dazugehöriger reflektierter Kanal-Impuls-Antworten; und ein Auswerten der empfangenen mehreren dazugehörigen reflektierten Kanal-Impuls-Antworten hinsichtlich einer Änderung in den empfangenen dazugehörigen reflektierten Kanal-Impuls-Antworten, wobei das Feststellen der Änderung in den dazugehörigen reflektierten Kanal-Impuls-Antworten die Anwesenheit des lebenden Objektes anzeigt. Das Feststellen der Änderung in den empfangenen, reflektierten Kanal-Impuls-Antworten lässt darauf zurückschließen, dass hinter dem Sichtschutz ein lebendes Objekt anwesend ist.

Ein noch weiterer Aspekt der vorliegenden Erfindung betrifft ein Multi-statistisches Radarsystem, welches mehrere hierin beschriebene UWB-Tags umfasst, um mehrere lebende Objekte gleichzeitig zu detektieren und/oder um einen Raum mit UWB darzustellen

Das hierin beschriebene Verfahren kann mit Hilfe eines Computerprogrammprodukt implementiert sein und ausgeführt werden, wenn das Computerprogrammprodukt auf einem Computer läuft.

Weitere vorteilhafte Ausgestaltungen der vorliegenden Erfindung sind der Gegenstand abhängiger Patentansprüche.

Bevorzugte Ausführungsformen der vorliegenden Lehre werden nachfolgend im Zusammenhang mit den beigefügten Figuren beschrieben. Es versteht sich von selbst, dass die beschriebenen Ausführungsformen den Umfang der hierin beschriebenen Lehre nicht limitieren. Es zeigen:
- Fig. 1: Stand der Technik, wie Geiseln aus einer kritischen Situation befreit werden;
- Fig. 2: eine Situation, in welcher der vorgeschlagene UWB-Tag angewendet wird;
- Fig. 3: schematisch die Funktionsweise des vorgeschlagenen UWB-Tags;
- Fig. 4: schematisch den Aufbau des vorgeschlagenen UWB-Tags;
- Fig. 5: schematisch die Situation gemäß Fig. 2, in welcher der vorgeschlagene UWB-Tag angewendet wird, und der UWB Tag mit einem externen Gerät kommuniziert;
- Fig. 6: schematisch ein Multi-statistisches Radarsystem;
- Fig. 7: ein Auswerteergebnissignal eines UWB-Tags;
- Fig. 8: ein Ablaufschema eines Verfahrens zum Feststellen einer Anwesenheit eines lebenden Objektes unter Verwendung mindestens eines UWB-Tags;
- Fig. 9: schematisch eine 2D Bestimmung eine Zielobjektes, und
- Fig. 10: einen Vergleich der gemessenen Phasen mit einem UWB Tag bei zwei verschiedenen linearen Bewegungen.

Das Prinzip der hierin offenbarten Lehre wird anhand möglicher Ausführungsbeispiele nachfolgend näher verdeutlicht, wobei die ausführliche Beschreibung einzelner Ausführungsbeispiele keine Beschränkung der hierin beschriebenen Lehre darstellt.

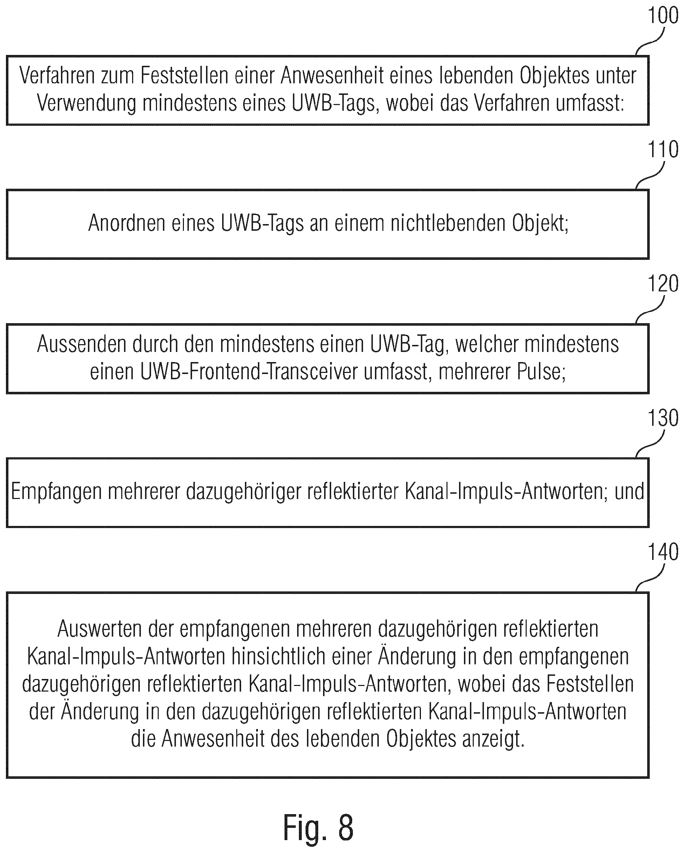

Einzelne Aspekte der hierin beschriebenen Erfindung sind nachfolgend in den Figuren 2 bis 10 beschrieben. In der vorliegenden Anmeldung betreffen gleiche Bezugszeichen gleiche oder gleichwirkende Elemente, wobei nicht alle Bezugszeichen in allen Zeichnungen, sofern sie sich wiederholen, erneut dargelegt sein müssen.
Fig. 1 zeigt schematisch, wie Geiseln aus einer kritischen Situation befreit werden und wurde bereit im einleitenden Teil ausführlich beschrieben.
Fig. 2 zeigt eine Situation, in welcher der vorgeschlagene UWB-Tag 10 angewendet wird.

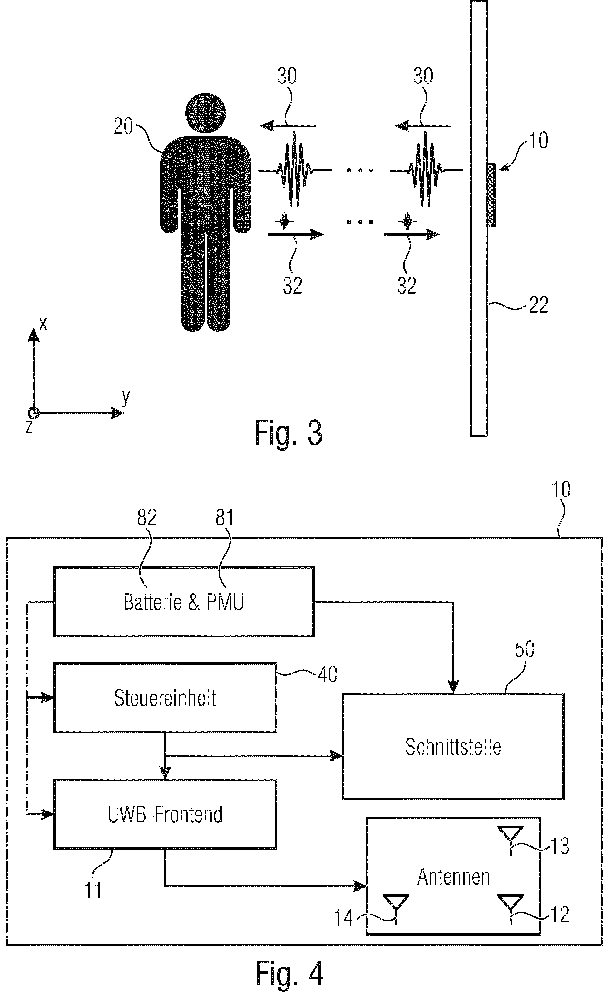

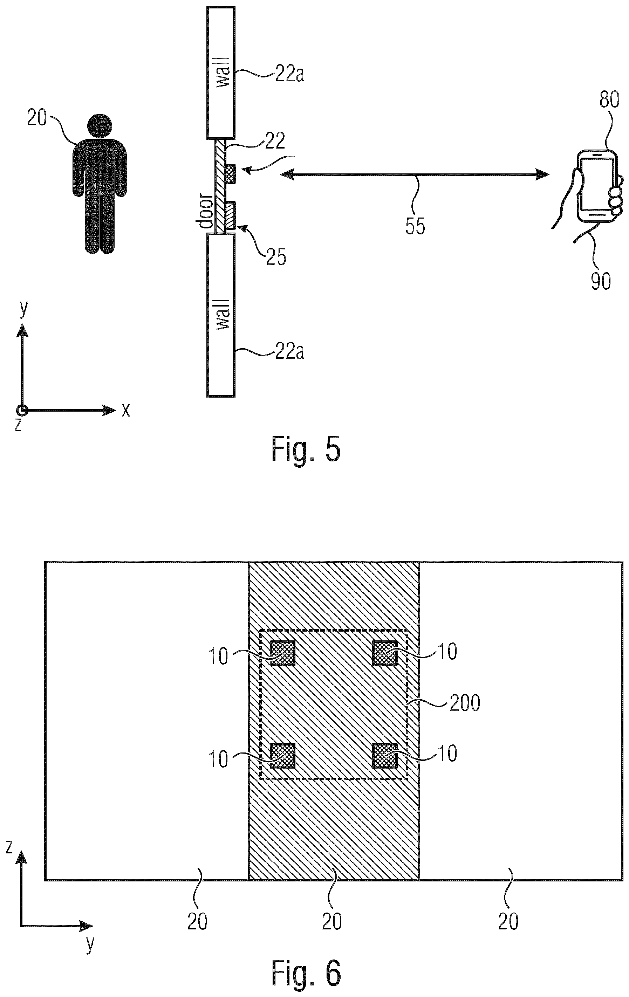

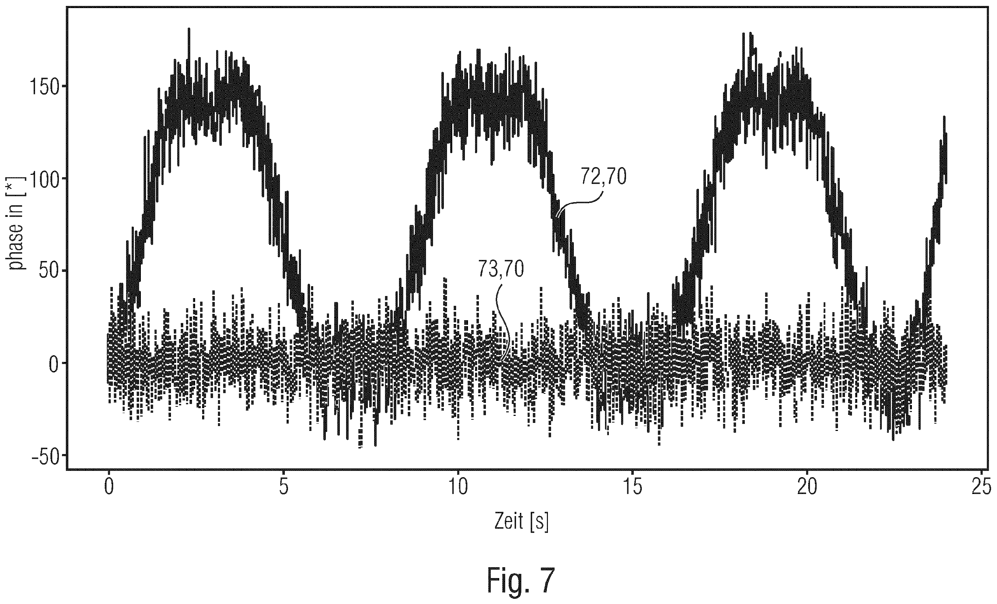

Fig. 3 zweigt schematisch die Funktionsweise des UWB-Tags 10. Fig. 4 zeigt schematisch den Aufbau eines einzigen UWB-Tags. Fig. 5 zeigt den UWB-Tag, welcher mit einem externen Gerät 80 kommuniziert. Fig. 6 zeigt ein Multi-statistisches Radarsystem, welches mindestens zwei UWB-Tags umfasst. Fig. 7 zeigt ein Auswerteergebnissignal 70 eines einzigen UWB-Tags 10. Der vorgeschlagene UWB-Tag wird in Zusammenschau der Figs 2 bis 7s nachfolgend erläutert.

Der vorgeschlagene UWB-Tag 10 zum Feststellen einer Anwesenheit eines lebenden Objektes 20, wie er in den Figs 2 bis 5 zu sehen ist, umfasst mindestens einen UWB-Frontend-Transceiver 11. Der UWB-Tag 10 ist dazu ausgebildet, mehrere Pulse 30 (wie in Fig. 3 zu sehen ist) zu senden und mehrere dazugehörige reflektierte Kanal-Impuls-Antworten 32 zu empfangen und anschließend hinsichtlich einer Änderung in den empfangenen dazugehörigen reflektierten Kanal-Impuls-Antworten 32 auszuwerten, wobei das Feststellen der Änderung in den dazugehörigen reflektierten Kanal-Impuls-Antworten 32 die Anwesenheit des lebenden Objektes 20 anzeigt.

Der UWB-Frontend-Transceiver 11 ist dazu ausgebildet, auf einer oder mehreren Trägerfrequenzen die mehreren Pulse periodisch und/oder nicht periodisch zu senden. Beispielsweise können die Trägerfrequenzen in den UWB-Kanälen 5-9, also mit einer Trägerfrequenz zwischen 6,5 bis 8GHz genutzt werden. Je nach dem, ob Energie eingespart werden soll, würde man die Trägerfrequenz der Messungen adaptiv ändern. Mit anderen Worten, es gibt eine Art Aufwachmodus, bei dem weniger oft und damit weniger genau Pulse ausgesendet und eine reflektierte Kanal-Impuls-Antwort gemessen wird. Beim Übergang zwischen dem Aufwachmodus und einem Betriebsmodus würden die Pulse häufiger gesendet werden, da eine genauere Messung erwünscht ist. Die Trägerfrequenz selbst ist periodisch, nur die Messpakete (d.h. die Pulsketten=die ausgesendeten Pulse) werden nicht periodisch bzw. mit sich ändernden Perioden gesendet.

Fig 2 zeigt das Scenario aus Fig. 1 mit dem Unterschied, dass an der Tür 22, d.h. dem nichtlebenden Objekt 22, welches gesprengt werden soll, sich auch ein UWB Tag 10 befindet. Dieser UWB-Tag 10 befindet sich in der Nähre zu einem Sprengsatz 25. Der UWB-Tag 10 sendet, insbesondere periodische, Pulse 30 aus und empfängt die dazugehörige Kanal-Impuls-Antworten. Diese Kanal-Impuls-Antworten 32 können dazu verwendet werden, um Bewegungen hinter der Tür 22 zu detektieren. Beispielsweise ist eine Bewegung hinter der Tür 22 eine Atmung eines lebenden Objektes 20 wie eines Menschen 22. Mit anderen Worten, eine detektierbare Bewegung muss nicht notwendigerweise eine Hand, Bein oder Bewegung des ganzen Körpers sein. Eine detektierbare Bewegung kann auch eine kleine Bewegung des Torsos sein, wie dieser zum Beispiel durch die menschliche Atmung oder den Herzschlag bewegt wird. Natürlich hängt die Aussagekraft, ob sich etwas bewegt hat, von der Größe der bewegten Oberfläche ab. Aber der sogenannte Radar Wirkungsquerschnittes eines atmenden menschlichen Körpers reicht normalerweise aus, um die atmende Person mit dem vorgeschlagenen UWB-Tag 10 zu detektieren.

Fig. 3 zeigt schematisch das Funktionsprinzip des UWB-Tags 10 im Einzelnen, welcher UWB-Radartechnologie nutzt. Der UWB-Tag 10 sendet eine Sequenz an Pulsen 30 auf einer Seite der Tür 22 aus. Diese Pulssequenz dringt durch die Tür 22 hindurch in den Raum ein, wo sie dann auf einer reflektierenden Oberfläche, beispielsweise einen Menschen 22, d.h. dem lebenden Objekt 22, auf der anderen Seite der Tür 22 trifft. Das von Menschen 22 zurück reflektierte Signal, d.h. die Kanal-Impuls-Antwort 32, breitet sich dann wiederum durch den Raum in Richtung der Tür 22 aus und durchdringt diese. Auf der anderen Seite der Tür 22 befindet sich wieder der UWB-Tag 10, welcher die reflektierten Pulse, d.h. die Kanal-Impuls-Antworten 32, empfängt und diese dann verarbeitet.

Der UWB-Frontend-Transceiver 11 ist dazu ausgebildet, die Pulse 30 gefaltet mit einer Korrelationskennung zu senden, auf Basis welcher die dazugehörige reflektierten Kanal-Impuls-Antworten 32 ermittelbar sind. Prinzipiell wird ein Puls mit einer Codesequenz gefaltet, welche gute Korrelationseigenschaften hat. Mit anderen Worten, anstatt nur einen Puls zu senden, wird beispielsweise eine Sequenz aus positiven und negativen Pulsen gesendet, welche mit der Codesequenz gefaltet worden sind. Gute Korrelationseigenschaften haben zum Beispiel Ipatov Präambeln. Diese besitzen eine ideale Autokorrelation, d.h. wenn man die Preamble mit sich selbst korreliert, dann erhält man nur einen puls als Korrelationsergebnis. Wenn man die Preamble mit anderen Ipatov Preamblen korreliert, dann erhält man ein verhältnismäßig sehr schwaches Korrelationsergebnis.

Wie in Fig. 4 zu sehen ist, kann der UWB-Frontend-Transceiver 11 mindestens eine Sendeantenne 12 zum Aussenden der mehreren Pulse 30 und mindestens zwei Empfangsantennen 13, 14 zum Empfangen der reflektierte Kanal-Impuls-Antworten 32 umfassen. Es ist auch möglich, dass eine Antenne 12, 13,1 4 als Empfangsantenne und als Sendeantenne dient. Mit anderen Worten, die mindestens eine Sendeantenne 12 zum Aussenden der mehreren Pulse 30 und die mindestens eine Empfangsantennen 13, 14 kann durch eine einzige Antenne gegeben sein. Anders als in Fig. 4 gezeigt, könnte das UWB Tag 10 mit nur einer einzigen Antenne ausgebildet sein, welche als Sende- und Empfangsantenne dient. Wie in Fig.4 gezeigt ist, können die mindestens zwei Empfangsantennen 13, 14 in dem einen UWB-Tag 10 beispielsweise voneinander distanziert angeordnet sein. Werden beispielsweise mindestens zwei UWB-Tags genutzt, können entweder zwei Empfangsantennen 13, 14 (eine Empfangsantenne 13, 14 pro UWB-Tag 10) vorhanden oder mindestens vier Empfangsantennen 13, 14 (zwei Empfangsantennen 13, 13 pro UWB-Tag 10) vorhanden sein, wobei die Empfangsantennen 13, 14 zueinander distanziert angeordnet sind. Es gibt außerdem noch viele weitere Möglichkeiten, die Empfangsantennen 13, 14 zueinander zu platzieren. Auch die Anzahl der Antenenne 12, 13,1 4 und/oder deren Position zueinander kann beliebig variiert werden.

Der UWB-Tag 10 ist dazu ausgebildet, in Abhängigkeit der Anzahl der Empfangsantennen 13, 14 mehrere, insbesondere unterschiedliche, Kanal-Impuls-Antworten (32), insbesondere sequenziell und/oder zeitgleich, zu empfangen. Hierbei kann die Anzahl der Antennen nur eine Antenne umfassen, welche als Sende- und Empfangsantenne dient. Oder die Anzahl der Antennen kann zwei oder mehr Antennen umfassen. Insbesondere können TX Antennen verwendet werden. Für einen zeitgleichen Empfang werden unterschiedliche Preamble Codes benötigt, welche sich bezüglich ihrer Korrelationseigenschaften möglichst unterscheiden. Für ein sequenzielles Empfangen der Kanal-Impuls-Antworten 32 müssen sich die Preambeln nicht unterscheiden, sofern es keine externen Geräte gibt, welche dieselben Präambeln verwenden und die Co-existenz erschweren würden.

Der UWB-Tag 10 umfasst eine Steuereinheit 40 und eine Bewegungs-Anzeigen-Schnittstelle 50, wobei die Steuereinheit 40 mit dem UWB-Frontend-Transceiver 11 und mit der Bewegungs-Anzeigen-Schnittstelle 50 in Kommunikationsverbindung steht, um die empfangenen reflektierten Kanal-Impuls-Antworten 32 zu erhalten und hinsichtlich der Änderung auszuwerten und um anschließend nach positiven Feststellen der Änderung, ein Auswertungsergebnissignal 72 an die Bewegungs-Anzeigen-Schnittstelle 50 zu übergeben, welche dazu ausgebildet ist, die Anwesenheit des lebenden Objektes 20, insbesondere einem Nutzer, mitzuteilen. Die Kommunikationsverbindung zwischen der Steuereinheit 40 und der Bewegungs-Anzeigen-Schnittstelle 50 kann unidirektional sein. Eine bidirektionale Kommunikation ist jedoch auch denkbar. Bevorzugt ist die Kommunikationsverbindung zwischen der Steuereinheit 40 und dem UWB-Frontend-Transceiver 11 bidirektional. Die Steuereinheit 40 ist dazu ausgebildet, die empfangenen reflektierten Kanal-Impuls-Antworten 32 nach Empfang auszuwerten. Beim Auswerten kann festgestellt werden, ob die empfangenen reflektierten Kanal-Impuls-Antworten 32 im zeitlichen Verlauf ihrer Phase eine Änderung zeigen. Die Änderung wird durch eine erfasste Periode(Sinus- oder Cosinus-Verlauf) in der ermittelten Phase festgestellt. Fig. 7 zeigt beispielsweise zwei Auswertungsergebnissignale 70, 72, 73. Das Auswertungsergebnissignal 73 zeigt im Mittel eine horizontale Gerade bei 0 Grad und entspricht dem Auswertungsergebnissignal, welches erhalten wird, wenn keine Atmung durch ein lebendes Objekt 20 feststellbar ist. Wird keine Bewegung wie beispielsweise eine Atmung und/oder ein Herzschlag detektiert, wird durch die Kanal-Impuls-Antwort 32 keine Periode erfasst, sondern im zeitlichen Verlauf im Mittel einer Gerade (siehe 73 in Fig. 7). Das Auswertungsergebnissignal 72 ist ein sich periodisch änderndes Phasensignal, welches anzeigt, dass eine Atmung durch ein lebendes Objekt 20 mittels des UWB-Tags 10 festgestellt werden konnte. Das Auswertungsergebnissignal 72 zeigt eine Periode. Mit anderen Worten: Die Atmung wird durch die Phasen-/Positionsänderung in der Periode des Auswertungsergebnissignals 72 in Fig. 7 erkannt. Wenn das lebende Objekt 20, wie eine Person nicht atmen würde, dann wäre in der Phase keine Periode zu sehen, wie in der Darstellung des Auswertungsergebnissignals 73 in Fig. 7 zu sehen ist. Deshalb ist das Auswertungsergebnissignals 70 ohne Bewegung, wie beispielsweise eine Atmung als horizontale Gerade 73 in Fig. 7 zu sehen. Das Auswertungsergebnissignals 73 kann dazu genutzt werden, einen Raum mittels UWB zu scannen. In dem Auswertungsergebnissignals 70, 72 mit Bewegung, insbesondere mit Atmung, ist die Periode im Phasensignal zu sehen. Die Dauer der Periode hängt von der Atemfrequenz ab. In Fig. 7 zeigen ist beispielsweise eine 10s Periode zu sehen, welche eine sehr langsame Atmung anzeigt. Mit der Atemfrequenz würde sich die Periodendauer ändern. Die sinus-Kurve 73 in Fig. 7 zeigt das Anheben und Absenken des Brustkorbs des Atmenden an. Mathematisch sucht man mit Hilfe einer Fouriertransformation nach einer periodischen Bewegung. Generell würde es aber schon reichen, irgendeine Bewegung zu detektieren (wie beispielsweise eine Bewegung des lebenden Objektes etc.), welche sich aus dem Rauschen heraushebt. Es ist beispielsweise möglich, die Oberkörperbewegung durch den Herzschlag zu detektieren, falls das lebende Objekt die Luft anhält.

Wie Fig. 4 zeigt umfasst der UWB-Tag 10 die Energie Regelungseinheit 81 (PMU), welche bevorzugt von Batterien 82 gespeist wird, da Kabel Nachteile bezüglich der Flexibilität und maximalen Distanz beim Anordnen des UWB-Tags 10 an einem nicht lebenden Objekt 22 hätten. Die Steuereinheit 40 kümmert sich um den Gerätezustand und die Ansteuerung des UWB-Frontend-Transceivers 11. Desweitern liest die Steuereinheit 40 auch die Kanal-Impuls- Antworten 32 vom UWB Frontend-Transceiver 11 aus und kümmert sich um Auswertung Kanal-Impuls- Antworten 32. Änderungen in der Kanal-Impuls- Antwort 32 sind ein Indiz für eine Bewegung. Solch eine Änderung in der Kanal-Impuls-Antwort 32 kann mit Hilfe eines festlegbaren Schwellenwertes, welcher überschritten wird, erkannt werden. Der Schwellwert ist ein Werte, welcher beispielsweise angibt, wie groß die Bewegung sein soll, beispielsweise 1-2cm Amplitude in der Kanal-Impuls- Antwort 32, um Atmung anzuzeigen. Dieser Wert ist aber nur ein Beispiel und kann sich je nach Applikation (beispielsweise Erkennung von Atmung und Herzschlag) bevorzugt ein anderer sein. Es ist auch denkbar, dass ein Signal, welches das Rauschverhältnis anzeigt, den Schwellwert allein bestimmt oder zusätzlich zu den bereits beschriebenen Möglichkeiten beeinflusst. Wird der Schwellenwert überschritten, wird die Bewegungs-Anzeigen-Schnittstelle 50 von der Steuereinheit 40 instruiert, eine Bewegung zu signalisieren. Je nach System Implementierung kann die Bewegungs-Anzeigen-Schnittstelle 50 relativ einfach ausgeführt sein, beispielsweise durch eine LED, oder eher komplex sein und ein Signal an ein oder mehre externe Geräte 80 schicken, damit diese(s) eine dementsprechende Visualisierung der Bewegung machen können. Solch eine Visualisierung kann zum Beispiel auf einem mobilen Gerät, welches von der Spezialeinheit gehalten wird stattfinden (siehe Fig. 5).

Die Bewegungs-Anzeigen-Schnittstelle 50 ist dazu ausgebildet, die Änderung unmittelbar an dem UWB-Tag 11 und/oder nach Weiterleiten des Auswertungsergebnissignals 70, 72, 73, welches die Änderung anzeigt, an mindestens ein externes Gerät 80 optisch und/oder akustisch einem Nutzer 90 anzuzeigen. Optisch könnte das Anzeigen der erfassten Änderung beispielsweise mittels Lichtanzeige (wie beispielsweise LED) in verschiedenen Farben erfolgen. Grünes Licht könnte das Feststellen der Änderung, d.h. der Atmung durch ein lebendes Objekt 20, anzeigen. Rotes Licht könnte des Nichtauffinden der Änderung, d.h. keine Atmung, anzeigen. Selbstverständlich könnten solche Farbcodes beliebig variieren. Akustisch könnte das Anzeigen der erfassten Änderung beispielsweise mittels Tonanzeige erfolgen, d.h. indem ein bestimmter Ton in der jeweiligen Situation ausgesendet wird. Das Anzeigen der Änderung könnte beispielsweise auf einem externen, insbesondere mobilen, Gerät 80, wie beispielsweise einem Mobiletelefon oder einem Smartphone angezeigt werden.

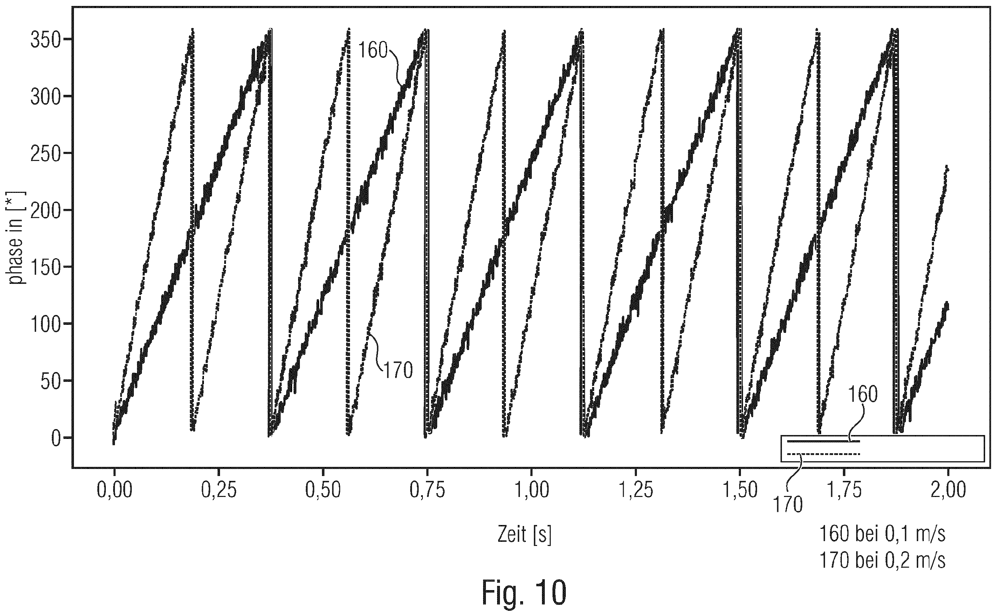

Das Auswertungsergebnissignal 70, 72, 73 umfasst Informationen zum Widergeben einer Radarantwort, wie beispielsweise das Scannen eines Raumes mittels UWB, und/oder Informationen über die Art einer Bewegung des lebenden Objektes 20. Eine Radarantwort ist vorliegend durch die zugehörige Kanal-Impuls-Antwort gegeben, welche sich über die Zeit ändert (siehe das Auswertungsergebnissignals 72 in Fig. 7). Diese zeitlichen Änderungen zeigen sich anhand von Phasen- und Amplitudenänderungen in der Kanal-Impulsresponse. Wie bereits zu Fig. 7 beschrieben, wird die Atmung durch die Phasen-/Positionsänderung der Peaks erkannt. Je nach Bewegung wird sich die Phase und die Amplitude der Kanal-Impuls-Antwort unterschiedlich ändern. Bei einer Atmung beispielsweise sieht man eine periodische Änderung in der Frequenz des Atmens. Bei einer linearen Bewegung sieht man die Bewegungsgeschwindigkeit in der Phase. Fig. 10 zeigt einen Vergleich der gemessenen Phasen mit einem UWB Tag 10 bei einer ersten linearen Bewegung 160 von 0,1 m/s und bei einer zweiten linearen Bewegung von 0,2 m/s. Die zweite lineare Bewegung 170 ist doppelt so schnell wie die erste lineare Bewegung 160. Folglich ist die Phasenperiode der zweiten linearen Bewegung 170 doppelt so schnell wie die Phasenperiode der ersten linearen Bewegung 160.

Der UWB-Tag 10 und das externe Gerät 80 sind dazu ausgebildet, über einen Datenkanal 55 wie UWB oder Wifi oder BLE miteinander, insbesondere bi-direktional, zu kommunizieren. In Fig. 5 ist das externe Gerät 80 beispielsweise als Smartphone dargestellt. Das externe Gerät 80 konnte durch ein externes mobiles Gerät wie einem Laptop oder dergleichen gegeben sein. Die Steuereinheit 40 könnte über das externe Gerät 80 angesteuert werden.

Das mobile externe Gerät 80 kann zum Beispiel die detaillierte ausgewertete Radar-Antwort, d.h. ein Auswertungsergebnissignal 70, 72, 73, anzeigen und mehr Informationen über die Art der Bewegung preisgeben (siehe Fig. 5). Beispielsweise kann eine Radarantwort eine Bewegungsgeschwindigkeit und/oder eine Bewegungsrichtung eines lebenden Objektes und/oder in welcher Distanz sich das lebende Objekt bewegt anzeigen. Der Datenkanal 55 zwischen dem UWB-Tag 10 und dem externen Gerät 80 kann über UWB stattfinden, aber auch andere Datenkanäle 55 wie z.B. Wifi, BLE,... wären je nach System-Implementierung gute Kandidaten. Der UWB-frontend-Transceiver 11 selbst kann potentiell auf einer oder mehreren Trägerfrequenzen die Pulse 30 aussenden. Wenn man die Kanal-Impuls-Antworten der Trägerfrequenzen kombiniert, kann die Genauigkeit, d.h. die Systemleistung, verbessert werden. Das Kombinieren der Kanal-Impuls-Antworten der Trägerfrequenzen nennt sich Channelstitching oder Bandstitching. Dabei werden zeitlich versetzte Messungen auf unterschiedlichen Kanälen miteinander kombiniert, um eine Messung mit einer höheren virtuellen Bandbreite zu erhalten. Normalerweise verwenden UWB Radar Technologien einfache Puls-Übertragungen ohne einen speziellen Korrelationskennung (Korrelationscode), jedoch kann mit Hilfe von Ipatov pre-Amblen welche in IEEE 802.15.4z/ab definiert sind, die Koexistenz verbessert werden, was zu einer besseren System Skalierbarkeit führen kann. Ob man Korrelationscodes verwendet oder nicht, ist wieder abhängig von der Implementierung des UWB-Tag 10. Ipatov Preamblen sind mathematische Faltungscodes mit idealen Autokorrelationseigenschaften und einer relativ guten Isolation zwischen den Codes.

Bevorzugt ist der UWB-Tag 10 ein Einweg-Gebrauchsprodukt, welches bei einer möglichen Explosion zerstört werden würde. Wenn nämlich, wie in den Figs 2 und 5 gezeigt ist, Sprengstoff 25 nahe dem UWB-Tag 10 an einem nichtlebenden Objekt 22, wie einer Tür 22 oder an einer Wand 22a angebracht werden würde, und das nicht lebende Objekt 22 nach Auffinden der Änderung, d.h. der Atmung eines lebenden Objektes 20 hinter dem nicht lebenden Objekt 22, gesprengt werden würde, so würde der UWB-Tag 10 mit der Explosion zerstört werden. Der vorgeschlagene UWB-Tag könnte an seiner Rückseite einen Kleber aufweisen, um den UWB-Tag 10 einem nicht lebenden Objekt 22 anzubringen. Der UWB-Tag 10 ist als eine Platine ausgebildet, welche in einem Gehäuse untergebracht, insbesondere eingegossen, ist.

Ein UWB-Tag 10 wird bevorzugt an einem nichtlebenden Objekt 22 angebracht, welches in Abstrahlrichtung keine vollflächigen Oberflächen besitzt. Umfasst das nichtlebende Objekt 22, an dem ein UWB-Tag 10 angebracht ist, zu viel Metall, können die ausgesendeten Pulse das nichtlebende Objekt nicht mehr transmittieren.

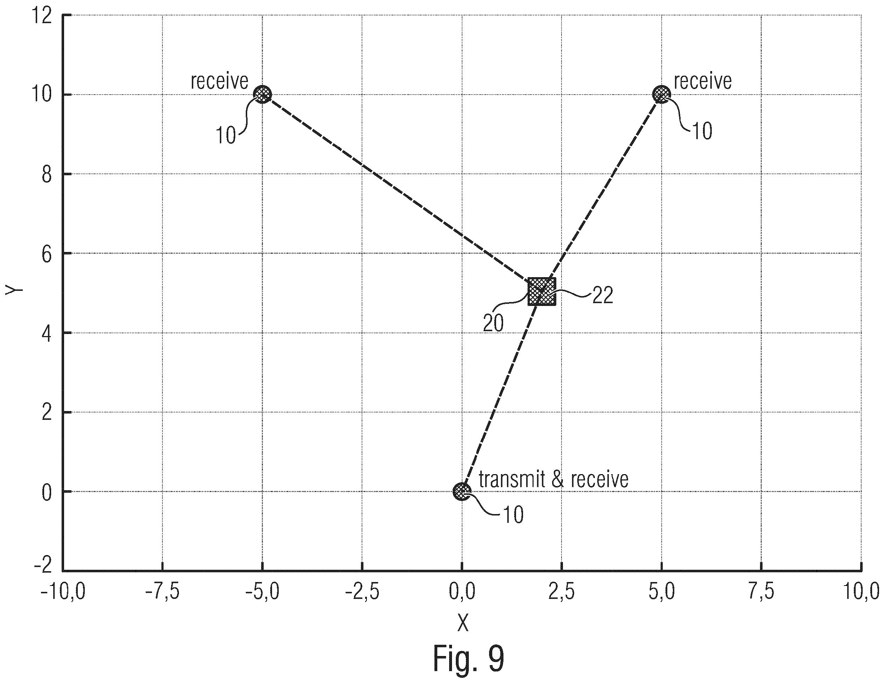

Fig. 6 zeigt einen weiteren Aspekt der vorliegenden Erfindung. Fig. 6 zeigt ein Multi-statistisches Radarsystem 200. Das vorgeschlagene Multi-statistisches Radarsystem 200 umfasst mehrere hierin beschriebene UWB-Tags 10, um mehrere lebende Objekte 20 gleichzeitig zu detektieren und/oder um einen Raum mit UWB darzustellen. Mit "einer Darstellung des Raumes" ist vorliegend eine Darstellung lebender Objekte 20 im Raum gemeint. Wenn ein Puls an einem nicht lebenden Objekt 22 reflektiert wird, weist die reflektierte Kanal-Impuls-Antwort keine Phasenverschiebung auf. Werden die verschiedenen Pulse des Multistatistischen Radarsystems 200 an verschiedenen lebenden Objekten 20 reflektiert, so kann mit den erfassten verschiedenen Änderungen, die verschiedenen Positionen der lebenden Objekte dreidimensional dargestellt werden. Fig. 9 zeigt beispielsweise wie eine 2D Position eines Zieles in zwei Dimensionen bestimmt werden kann. Die Zwei Dimensionen umfassten ein X- und eine Y-Korrodinate. Beispielsweise könnte ein UWB Tag 10 zum Aussenden mehrerer Pulse und zum Empfangen der am Objekt 20, 22 reflektierten Kanal-Impuls-Antworten 32 genutzt werden. Außerdem könnten weitere UWB-Tags 10 nur zum Empfangen derselben Kanal-Impuls-Antworten 32 genutzt werden, wobei die weiteren UWB-Tags 10 an unterschiedlichen Orten, d.h. beabstandet zueinander, angeordnet sind. Mit anderen Worten, nur ein UWB-Tag 10 sendet Pulse aus, während mehrere UWB-Tags 10 die Kanal-Impuls-Antworten detektieren. Aus den erfassten Kanal-Impuls-Antworten kann dann in zwei Dimensionen (X, Y) die Position des Zieles ermittelt werden.

In Fig. 6 sind beispielsweise vier UWB-Tags 10 an einer Tür 22, dem nicht lebenden Objekt 22, angebracht. Mit anderen Worten, mit dem Multi-statistisches Radarsystem 200 aus Fig. 6 könnten bis zu vier lebende Objekte 20 erfasst werden. Dabei ist zu bemerken, das jeder UWB-Tag 10 einen anderen Raumwinkel mittels UWB abscannt.

Bevorzugt sind die mehreren UWB-Tags 10 an mindestens einem nichtlebenden Objekt 22 angeordnet, insbesondere wobei ein nichtlebendes Objekt 22 eine Tür 22 oder eine Wand 22a oder ein im Wesentlichen ruhiggehaltenes oder stehendes Gerät ist. Das ruhiggehaltene Gerät könnte beispielsweise eine Maschinenpistole oder dergleichen sein. Der UWB Tag 10 kann direkt an einem ruhiggehaltenen Gerät wie z.B. einer Waffe platziert werden, wodurch auch eine Bewegung in anderen Räumen detektiert werden kann, insofern dieses Gerät relativ stillgehalten wird.

Die Platzierung und die Anzahl der UWB Tags 10 kann auch von Szenario zu Scenario variieren. Zum Beispiel, zur Verbesserung der Systemleistung und der Bildgebung, kann das multi-statisches Radarsystem 200 aus mehreren UWB Tags 10 aufgebaut werden, um mehrere lebende Objekte 20 gleichzeitig zu detektieren.

Fig. 6 zeigt ein Beispiel wie mehrere UWB-Tags 10 platziert werden können, um eine Art Röntgenbild des Raumes mit Hilfe der UWB-technologie zu erstellen. Die Platzierung und Anzahl der Tags kann variieren, je nachdem wie viele Objekte gezeitigt detektiert werden müssen und wie detaileiert das Bild des Raumes sein muss.

Das Multi-statistische Radarsystem 200 ist dazu ausgebildet, pro Paar UWB-Frontend-Transceiver 11, bei dem die Sendeantenne 12, TX, und die Empfangsantenne 13, 14, RX, voneinander in jeweils einem der beiden UWB-Frontend-Transceiver 11 oder in ein und demselben UWB-Frontend-Transceiver 11 voneinander getrennt sind, eine einzige Kanal-Impuls-Antwort 32 zu erhalten. Mit anderen Worten, ein einziges Paar UWB-Frontend-Transceiver 11 kann eine Kanal-Impuls-Antworten empfangen. Je mehr Paare UWB-Frontend-Transceiver 11 verwendet werden, desto mehr Kanal-Impuls-Antworten können empfangen werden. Hierdurch kann man mehrere Signale erhalten bzw. mehrere Kanal-Impuls-Antworten 32, wodurch eine Genauigkeit der Radarantwort bzw. eines Bildes zu der Radarantwort verbessert werden kann.

Mit anderen Worten, in einem multi-statischen Radarsystem 200 erlauben es einem mehrere UWB Tags 10 mehrere Kanal-Impuls-Antworten 32 zu erstellen. Das multi-statische Radarsystem 200 kann auch durch UWB-Tags gebildet werden, welche jeweils nur eine TX/RX Antenne aufweisen. Wenn nur eine TX/RX Antenne in einem UWB-Tag vorhanden ist, sendet diese eine TX/RX Antenne Pulse aus und empfängt die reflektierten Kanal-Impuls-Antworten 32. In Diesem Fall gilt: Mit N UWB-Tags 10 kann man N*(N-1) Kanal-Impuls-Antworten 32 erstellen, da von jedem UWB-Tag Paar eine Kanal-Impuls-Antwort 32 erstellt werden kann, wodurch ein viel detailliertes Bild der Konstellation des Raumes erstellt werden kann. In der Gleichung oben ist N eigentlich die Anzahl der TX/RX Antennen d.h. je mehr Antennen ein Tag hat, desto mehr Kanal-Impuls-Antworten 32 können erstellt werden

Ein Vorteil des multi-statischen Radarsystems 200, wie es in Fig. 6 gezeigt ist, ist, dass das multi-statische Radarsystem 200 typischerweise die Antennenisolierung verbessert, da die Antennen 12, 13, 14 der mehreren UWB-Tags 10 bedingt durch die Anordnung der UWB-Tags 10 räumlich weiter voneinander getrennt sind, wodurch das direkte Übersprechen besser unterdrückt werden kann.

Das hierin beschriebene Multi-statistisches Radarsystem 200 ist dazu ausgebildet, ein Verfahren 100 durchzuführen, welches nachfolgend beschrieben wird.

Fig. 7 zweit einen weiteren Aspekt der vorliegenden Erfindung. Fig. 7 zeigt ein Ablaufschema eines Verfahrens 100 zum Feststellen einer Anwesenheit eines lebenden Objektes 20 unter Verwendung mindestens eines UWB-Tags 10.

Das Verfahren 100 zum Feststellen einer Anwesenheit eines lebenden Objektes 20 unter Verwendung mindestens eines UWB-Tags 10 umfasst in Schritt 110 ein Anordnen des mindestens einen UWB-Tags 10 an einem nichtlebenden Objekt 22. In Schritt 120 umfasst das Verfahren 100 ein Aussenden mehrerer Pulse 30 durch den mindestens einen UWB-Tag 10, welcher mindestens einen UWB-Frontend-Transceiver 11 umfasst. In Schritt 130 umfasst das Verfahren 100 ein Empfangen mehrerer dazugehöriger reflektierter Kanal-Impuls-Antworten 32. Schließlich umfasst das Verfahren 100 in Schritt 140 ein Auswerten der empfangenen mehreren dazugehörigen reflektierten Kanal-Impuls-Antworten 32 hinsichtlich einer Änderung in den empfangenen dazugehörigen reflektierten Kanal-Impuls-Antworten 32, wobei das Feststellen der Änderung in den dazugehörigen reflektierten Kanal-Impuls-Antworten 32 die Anwesenheit des lebenden Objektes 20 anzeigt. Die Verfahrensschritte 110, 120, 130, 140 sind in aufsteigender Ordnung durchzuführen.

Das Verfahren 100 kann ein periodisches oder nicht periodisches Aussenden der mehreren Pulse 30 auf einer oder mehreren Trägerfrequenzen umfassen. Zusätzlich oder alternativ kann das Verfahren ein Senden jeden Pulses 30 mit einer Korrelationskennung (Korrelationscode) umfassen, auf Basis welcher die dazugehörige reflektierte Kanal-Impuls-Antwort 32 ermittelbar ist. Wie bereits in Verbindung mit der Vorrichtung 10 beschrieben, ist es möglich, von dem periodischen Aussenden zu einem nicht periodischen Aussenden oder anders herum zu wechseln. Das periodische und nicht periodische Aussenden erfolgt bevorzugt zeitlich hintereinander, d.h. sequenziell.

Das Verfahren 100 kann ein, insbesondere sequenzielles und/oder zeitgleiches, Empfangen mehrerer, insbesondere von unterschiedlichen Transmittern 11 stammenden, Kanal-Impuls-Antworten 32 umfassen.

Das Verfahren 100 umfasst nach Feststellen der Änderung ein Übergeben eines Auswerteergebnissignals 70, 72 an eine Bewegungs-Anzeigen-Schnittstelle 50 und/oder an mindestens ein externes Gerät 80, um die Anwesenheit des lebenden Objektes 20 mitzuteilen, wobei das Verfahren 100 ein Anzeigen der Änderung unmittelbar an dem UWB-Tag 10 und/oder an dem mindestens einen externen Gerät 80 umfasst. Das Verfahren umfasst ferne ein Übergeben eines Auswerteergebnissignals 70, 72 an eine Bewegungs-Anzeigen-Schnittstelle 50 und/oder an mindestens ein externes Gerät 80, um anzuzeigen, dass kein lebendes Objekt 20 detektiert worden ist. Einzelheiten hierzu wurden bereit im Zusammenhang mit dem UWB-Tag 10 beschrieben, worauf hiermit Bezug genommen ist.

Das Verfahren 100 umfasst ferner ein Kommunizieren des UWB-Tags 10 und des externen Gerätes 80 über einen Datenkanal 55 wie UWB oder Wifi oder BLE, miteinander.

Gemäß einem weiteren Aspekt, kann der hierin beschriebenen UWB-Tags 10 als ein Computerprogrammprodukt zur Durchführung eines hierin beschriebenen Verfahrens 100 vorgesehen sein, wenn das Computerprogrammprodukt auf einem Computer läuft.

Obwohl manche Aspekte im Zusammenhang mit einer Vorrichtung beschrieben wurden, versteht es sich, dass diese Aspekte auch eine Beschreibung eines entsprechenden Verfahrens darstellen, sodass ein Block oder ein Bauelement der Vorrichtung auch als ein entsprechender Verfahrensschritt oder als ein Merkmal eines Verfahrensschrittes zu verstehen ist. Auf eine vollständige Darstellung der vorliegenden Erfindung in Form von Verfahrensmerkmalen wird vorliegend aus Redundanzgründen abgesehen.

In der vorhergehenden detaillierten Beschreibung wurden teilweise verschiedene Merkmale in Beispielen zusammen gruppiert, um die Offenbarung zu rationalisieren. Diese Art der Offenbarung soll nicht als die Absicht interpretiert werden, dass die beanspruchten Beispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Beispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen. Solche Kombinationen seien umfasst, es sei denn es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

### Referenzen

1. https://jwcn-eurasipiournals.springeropen.com/articles/10.1186/1687-1499-2011-20
2. https://spyassociates.com/ultra-wideband-gpr-detector-to-see-through-wallsground/
3. https://retwis.eu/
4. https://themedialine.org/life-lines/new-israeli-tech-that-can-see-through-walls-tobe-unveiled-at-paris-military-expo/

## Patentansprüche

1. UWB-Tag (10) zum Feststellen einer Anwesenheit eines lebenden Objektes (20), wobei der UWB-Tag (10) mindestens einen UWB-Frontend-Transceiver (11) umfasst und der UWB-Tag (10) dazu ausgebildet ist, mehrere Pulse (30) zu senden und mehrere dazugehörige reflektierte Kanal-Impuls-Antworten (32) zu empfangen und anschließend hinsichtlich einer Änderung in den empfangenen dazugehörigen reflektierten Kanal-Impuls-Antworten (32) auszuwerten, wobei das Feststellen der Änderung in den dazugehörigen reflektierten Kanal-Impuls-Antworten (32) die Anwesenheit des lebenden Objektes (20) anzeigt.

2. UWB-Tag (10) nach Anspruch 1, wobei der UWB-Frontend-Transceiver (11) dazu ausgebildet ist, auf einer oder mehreren Trägerfrequenzen die mehreren Pulse periodisch und/ oder nicht periodisch zu senden, und/oder
wobei der UWB-Frontend-Transceiver (11) dazu ausgebildet ist, die Pulse (30) gefaltet mit einer Korrelationskennung zu senden auf Basis welcher die dazugehörige reflektierte Kanal-Impuls-Antwort (32) ermittelbar ist.

3. UWB-Tag (10) nach einem der Ansprüche 1 bis 2, wobei der UWB-Frontend-Transceiver (11) mindestens eine Sendeantenne (12) zum Aussenden der mehreren Pulse (30) und mindestens eine Empfangsantenne (13, 14) zum Empfangen der reflektierte Kanal-Impuls-Antworten (32) umfasst.

4. UWB-Tag (10) nach Anspruch 3, wobei der UWB-Tag (10) dazu ausgebildet ist, in Abhängigkeit der Anzahl der Empfangsantennen (13, 14) mehrere, insbesondere von unterschiedlichen Transmittern stammenden, Kanal-Impuls-Antworten (32), insbesondere sequenziell und/oder zeitgleich, zu empfangen.

5. UWB-Tag (10) nach einem der vorherigen Ansprüche, wobei der UWB-Tag (10) eine Steuereinheit (40) und eine Bewegungs-Anzeigen-Schnittstelle (50) umfasst, wobei die Steuereinheit (40) mit dem UWB-Frontend-Transceiver (11) und mit der Bewegungs-Anzeigen-Schnittstelle (50) in Kommunikationsverbindung steht, um die empfangenen reflektierten Kanal-Impuls-Antworten (32) zu erhalten und hinsichtlich der Änderung auszuwerten und um anschließend nach positiven Feststellen der Änderung, ein Auswertungsergebnissignal (70, 72, 73) an die Bewegungs-Anzeigen-Schnittstelle (50) zu übergeben, welche dazu ausgebildet ist, die Anwesenheit des lebenden Objektes (20) mitzuteilen,
insbesondere ist die Bewegungs-Anzeigen-Schnittstelle (50) dazu ausgebildet, die Änderung unmittelbar an dem UWB-Tag (11) und/oder nach Weiterleiten des Auswertungsergebnissignals (70), welches die Änderung anzeigt, an mindestens ein externes Gerät (80) optisch und/oder akustisch einem Nutzer (90) anzuzeigen,
insbesondere umfasst das Auswertungsergebnissignal (70) Informationen zum Widergeben einer Radarantwort und/oder Informationen über die Art einer Bewegung des lebenden Objektes (20) umfasst,
insbesondere sind der UWB-Tag (10) und das externe Gerät (80) dazu ausgebildet sind, über einen Datenkanal wie UWB oder Wifi oder BLE miteinander zu, insbesondere bi-direktional, kommunizieren.

6. UWB-Tag (10) nach einem der vorherigen Ansprüche, wobei der UWB-Tag (10) eine Energie-Regelungs-Einheit (81), PMU, umfasst, wobei die Energie-Regelungs-Einheit (81) dazu ausgebildet ist, den UWB-Tag (10) über eine Batterie (82) mit Energie zu versorgen.

7. UWB-Tag (10) nach einem der vorherigen Ansprüche, wobei der UWB-Tag (10) ein Einweg-Gebrauchsprodukt ist.

8. Verfahren (100) zum Feststellen einer Anwesenheit eines lebenden Objektes (20) unter Verwendung mindestens eines UWB-Tags (10), wobei das Verfahren umfasst:
Anordnen des mindestens einen UWB-Tags (10) an einem nichtlebenden Objekt (22);
Aussenden durch den mindestens einen UWB-Tag (10), welcher mindestens einen UWB-Frontend-Transceiver (11) umfasst, mehrerer Pulse (30);
Empfangen mehrerer dazugehöriger reflektierter Kanal-Impuls-Antworten (32); und
Auswerten der empfangenen mehreren dazugehörigen reflektierten Kanal-Impuls-Antworten (32) hinsichtlich einer Änderung in den empfangenen dazugehörigen reflektierten Kanal-Impuls-Antworten (32), wobei das Feststellen der Änderung in den dazugehörigen reflektierten Kanal-Impuls-Antworten (32) die Anwesenheit des lebenden Objektes (20) anzeigt.

9. Verfahren (100) nach Anspruch 8, wobei das Verfahren (100) umfasst:
periodisches oder nicht periodisches Aussenden der mehreren Pulse (30) auf einer oder mehreren Trägerfrequenzen; und/ oder
Senden jeden Pulses (30) mit einer Korrelationskennung auf Basis welcher die dazugehörige reflektierte Kanal-Impuls-Antwort (32) ermittelbar ist, und /oder
insbesondere sequenzielles und/oder zeitgleiches, Empfangen mehrerer, insbesondere von unterschiedlichen Transmitter stammenden, Kanal-Impuls-Antworten (32).

10. Verfahren nach einem der Ansprüche 8 bis 9, wobei das Verfahren umfasst:
Nach Feststellen der Änderung Übergeben eines Auswerteergebnissignals (70) an eine Bewegungs-Anzeigen-Schnittstelle (50S) und/oder an mindestens ein externes Gerät (80), um die Anwesenheit des lebenden Objektes (20) mitzuteilen, wobei das Verfahren (100) ein Anzeigen der Änderung unmittelbar an dem UWB-Tag (10) und/oder an dem mindestens einen externen Gerät (80) umfasst,
insbesondere umfasst das Verfahren (100):
Kommunizieren des UWB-Tags (10) und des externen Gerätes (80) über einen Datenkanal wie UWB oder Wifi oder BLE, miteinander.

11. Multi-statistisches Radarsystem (200), welches mehrere UWB-Tags (10) nach einem der Ansprüche 1 bis 7 umfasst, um mehrere lebende Objekte (20) gleichzeitig zu detektieren und/oder um einen Raum mit UWB darzustellen.

12. Multi-statistisches Radarsystem (200) nach Anspruch 11, wobei die mehreren UWB-Tags (10) an mindestens einem nichtlebenden Objekt (20) angeordnet sind, insbesondere wobei ein nichtlebendes Objekt (20) eine Tür oder eine Wand oder ein im Wesentlichen ruhiggehaltenes oder stehendes Gerät ist.

13. Multi-statistisches Radarsystem (200) nach Anspruch 11 oder 12, das dazu ausgebildet ist, pro Paar UWB-Frontend-Transceiver (11), bei dem die Sendeantenne (12), TX, und die Empfangsantenne (13, 14), RX, voneinander in jeweils einem der beiden UWB-Frontend-Transceiver (11) getrennt sind, eine einzige Kanal-Impuls-Antwort (32) zu erhalten.

14. Multi-statistisches Radarsystem (200) nach einem der Ansprüche 11 bis 13, wobei das Multi-statistisches Radarsystem (200) dazu ausgebildet ist, ein Verfahren (100) nach einem der Ansprüche 12 bis 16 durchzuführen.

15. Computerprogrammprodukt zur Durchführung eines Verfahrens (100) nach einem der Ansprüche 8 bis 10, wenn das Computerprogrammprodukt auf einem Computer läuft.
